# EUROPEAN PATENT SPECIFICATION

(11) **EP 1 745 614 B1**
(45) Date of publication and mention of the grant of the patent: **03.02.2010**
(21) Application number: 05737969.5
(22) Date of filing: 13.05.2005
(51) Int. Cl.: H04L 12/58, H04W 4/12, H04M 1/725, G06T 5/00, H04L 29/08

(54) **DEVICE AND METHODS FOR AUTOMATIC MODIFICATION OF MULTIMEDIA MESSAGES**
VORRICHTUNG UND VERFAHREN ZUR AUTOMATISCHEN MODIFIKATION VON MULTIMEDIANACHRICHTEN
DISPOSITIF ET PROCEDES DE MODIFICATION AUTOMATIQUE DE MESSAGES MULTIMEDIA

(30) Priority: 14.05.2004 US 846279
(43) Date of publication of application: 24.01.2007
(73) Proprietor: TELEFONAKTIEBOLAGET LM ERICSSON (publ), 164 83 Stockholm (SE)
(72) Inventor: EWERT, Joerg, Christian, 41812 Erkelenz (DE); STUMPERT, Martin, 67691 Hochspeyer (DE)
(74) Representative: von Zmuda-Trzebiatowski, Margarethe
(86) International application number: PCT/IB2005/001323
(87) International publication number: WO 2005/112373

(56) References cited:
- WO-A-02/085018
- WO-A-2004/052035
- JP-A- 2002 335 369
- US-A1- 2003 120 940
- US-A1- 2004 075 755

## Description

### BACKGROUND OF THE INVENTION

The present invention relates to radio telecommunication systems. More particularly, and not by way of limitation, the invention relates to a system and method for automatically modifying multimedia messages sent from a mobile phone with multimedia capabilities.

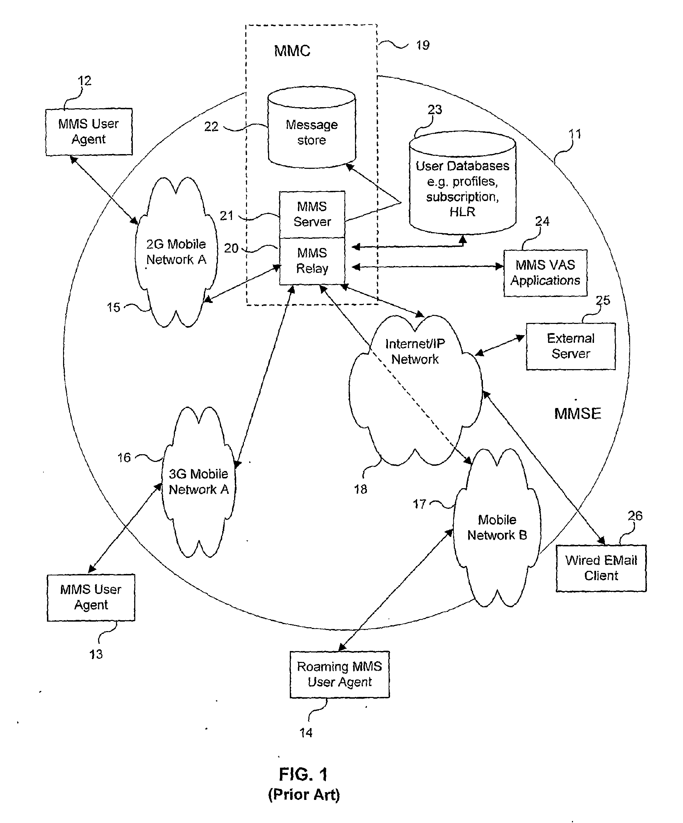

FIG. 1 is a simplified block diagram of a typical network configuration in which a Multimedia Messaging Service Environment (MMSE) 11 has been implemented. The Multimedia Messaging Service (MMS) enables mobile subscribers to take pictures with their camera-capable mobile phones and send the photographs through the network to other mobile phones or fixed-line subscribers. Mobile subscribers (i.e., MMS User Agents) 12-14 may access the MMSE through, for example, a 2G mobile network 15, a 3G mobile network 16, or a foreign mobile network 17 and the Internet or other IP network 18. A Multimedia Messaging Center (MMC) 19 may include an MMS Relay 20, an MMS Server 21, and a message store 22 for storing MMS messages until recipients retrieve them. Other user databases 23 storing, for example, subscriber profiles, subscription information, or other Home Location Register (HLR) information may be connected to the MMS Relay. MMS Value Added Services (VAS) applications 24 may also be connected to the MMS Relay. External servers 25 and wired e-mail clients 26 may connect to the MMS Relay through the Internet/IP network.

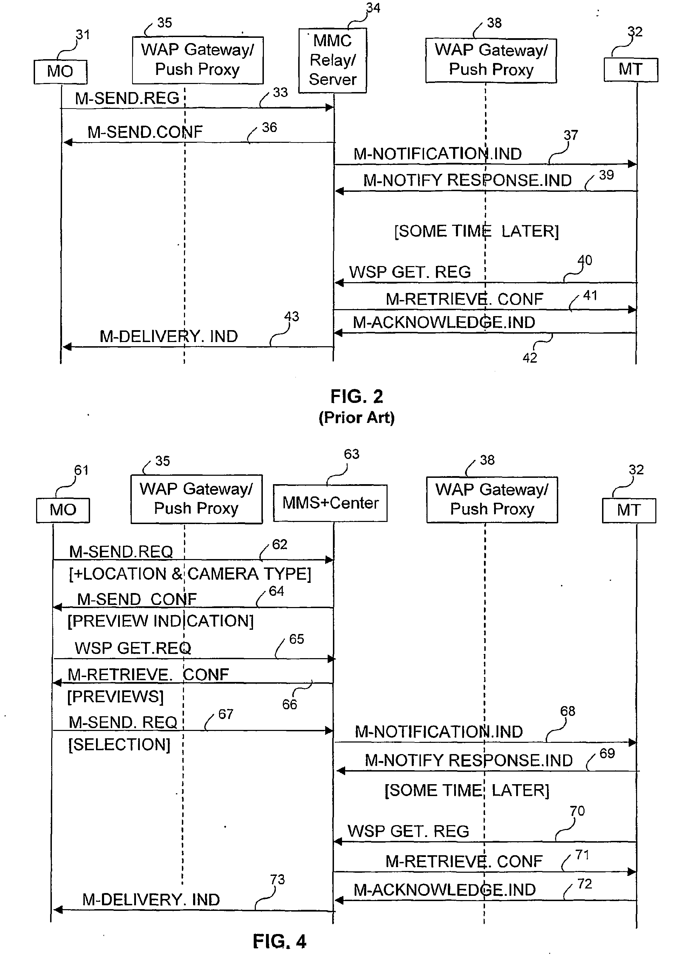

FIG. 2 is a message flow diagram illustrating the flow of messages between network elements when a multimedia message such as a photograph is sent from an originating MMS User Agent (MO) 31 to a terminating MMS User Agent (MT) 32 using conventional signaling methodologies. The MO originates a multimedia message by sending a M-Send.req message 33 to the Multimedia Messaging Center (MMC) Relay/Server 34 via a Wireless Application Protocol (WAP) Gateway/Push Proxy 35. This transmits the required data for the photograph from the MO to the MMC Relay/Server and provides a transactional context for the resulting M-Send.conf response message 36.

The MMC Relay/Server 34 sends an M-Notification.ind message 37 to the MT 32 via a HTTP/PUSH through a WAP Gateway 38. The M-Notification.ind message informs the MT that a multimedia message is available for retrieval, Included as a data component is a Universal Resource Locator (URL) of the multimedia message that is being stored by the MMC Relay/Server. The URL functions as a message ID for the specific message to be delivered to this specific MT. The MT sends an M-Notify Response.ind 39 to the MMC Relay/Server indicating that the M-Notification.ind message was received. At some time later, when the MT desires to retrieve the multimedia message, the MT sends a WSP GET.req message 40 to the MMC Relay/Server. The retrieval activity is performed via the WSP/HTTP on the URL provided. In response, the MMC Relay/Server sends to the MT an M-Retrieve.conf message 41, which contains the actual multimedia message to be presented to the receiving subscriber.

The MMC Relay/Server 34 may also request information from the MT 32 to confirm that the MT actually received the multimedia message. In one approach, a distinct M-Acknowledge.ind message 42 is sent from the MT to the MMC Relay/Server when the multimedia message is successfully received. The MMC Relay/Server may optionally send a delivery report back to the MO 31. This may be done utilizing MTTP/PUSH technology to send an M-Deiivery.ind message 43 to the MO.

In a similar context JP-2002-335369-A discloses a method for editing images received form a mobile station.

Despite the features described above, the number and frequency with which subscribers utilize MMS is below the expectations of network operators. In many cases, subscribers might utilize MMS, but conditions are not good for taking photographs. Alternatively, the subscribers may not think that their photograph is interesting enough to send. The present invention provides a solution to help overcome these problems and increase subscriber utilization of MMS.

### SUMMARY OF THE INVENTION

It is therefore an object of the present invention to overcome the above mentioned problems and to provide a system and method for automatically modifying multimedia messages sent from a mobile phone with multimedia capabilities.

Thus, in one aspect, the present invention is directed to methods in accordance with claims 1, 7 and 8 and to a service centre in accordance with claim 11. The dependent claims are directed to further embodiments.

### BRIEF DESCRIPTION OF THE DRAWINGS

In the following section, the invention will be described with reference to exemplary embodiments illustrated in the figures, in which:
FIG. 1 (Prior Art) is a simplified block diagram of a typical network configuration in which the Multimedia Messaging Service (MMS) has been implemented;
FIG. 2 (Prior Art) is a message flow diagram illustrating the flow of messages between network elements when a multimedia message such as a photograph is sent from an originating MMS User Agent (MO) to a terminating MMS User Agent (MT) using conventional signaling methodologies;
FIG. 3 is a flow chart illustrating the steps of the preferred embodiment of the method of the present invention;
FIG. 4 is a message flow diagram illustrating the flow of messages between network elements when a multimedia message such as a photograph is manipulated by an enhanced MMS+Center and then sent from an MO to an MT in accordance with the teachings of the present invention; and
FIG. 5 is a simplified block diagram of an embodiment of the enhanced MMS+Center of the present invention.

### DETAILED DESCRIPTION OF PREFERRED EMBODIMENTS

In the following description, for purposes of explanation and not limitation, specific details are set forth, such as particular embodiments, circuits, signal formats, and the like in order to provide a thorough understanding of the present invention. It will be apparent to one skilled in the art that the present invention may be practiced in other embodiments that depart from these specific details.

The present invention provides an enhanced MMS+ service, which may be particularly useful when environmental conditions are not optimal for taking photographs. For example, there may not be enough light, it may be raining, or a particular tourist attraction that the subscriber wishes to photograph may be under construction or renovation. The present invention enables the subscriber to take a photograph under the less than optimal conditions, and send the photograph to an MMS+ service provider. The MMS+ service provider automatically manipulates the photograph to improve its quality, and sends one or more versions of the photograph back to the subscriber for review and approval. The MMS+ service provider may manipulate the photograph itself (for example, zooming in on items of interest or adjusting the brightness, color, or clarity), or may paste images from an image database into the photograph. The subscriber can accept a manipulated photograph and send it to another subscriber, reject the manipulated photograph and discard it in favor of the original photograph, or cancel the transaction altogether.

In one embodiment, the subscriber's mobile phone requests its position via location-based services, and sends the location information together with a photograph to the MMS+ service provider. The location information may be pasted into the photograph in a suitable manner, for example by a java application, before the photograph is sent from the mobile phone. When the MMS+ service provider receives the photograph and the location information, the MMS+ service provider extracts the location information. The location information may then be converted to an ID associated with the approved MMS+ location closest to the location received from the mobile phone. The location information, or optionally the location ID, is then used to access a database of images to determine whether there is an image stored in the database that is applicable to the photograph received from the subscriber. If so, automatic manipulation is performed.

In another embodiment, the mobile phone sends an MMS message to the MMS+ service provider with a photograph and an indication that enhanced MMS+ services are requested. The MMS+ service provider then obtains the location of the mobile phone through location-based services. Alternatively, deferred location reporting is used, and the MMS+ service provider is notified whenever the user enters an identified area where enhanced MMS+ services are provided. The MMS+ services provider stores this information so that when the MMS+ services provider receives an MMS message from the mobile phone, the MMS+ services provider can associate the location with the received MMS message.

In one embodiment, if the photograph contains people in front of a poor quality background, the MMS+ service provider may enhance the photograph by keeping the people in the foreground and replacing the background with a high quality background image appropriate for the reported location. For example, if the location information indicates that the subscriber is near the Eiffel Tower, a high quality background image of the Eiffel Tower is selected and pasted into the photograph. Since the photograph has been taken from a known location in a known direction, the perspective of the original photograph and the image in the database should be quite similar.

Additionally or alternatively, the MMS+ service provider may manipulate the photograph to enhance the colors, brighten the image, and/or improve the clarity of the image. The MMS+ service provider compares the two pictures and adjusts them to minimize differences in brightness and color per pixel. Additionally, a specific area in the original photograph such as the area containing the people in the foreground, or an area containing a point of interest, may be marked with a stencil. Within this area, the original photograph is compared with the image in the database. Each pixel between the original photograph and the image in the database is compared regarding color and brightness. If the differences exceed a predefined threshold, the pixel color and brightness from the original photograph are taken; otherwise, the pixel color and brightness from the database image are taken. This algorithm may be enhanced with more sophisticated, known, edge-detection mechanisms to minimize the border between the stenciled area and the rest of the photograph.

In another embodiment, the MMS+ service provider may add elements into the photograph that were not in the original photograph. For example, images of celebrity persons of public interest, such as politicians, entertainers, sports stars, and the like may be inserted into the photograph in such a way that they appear to be standing with the people in the original photograph. Images of other objects may also be inserted into the photograph to add interest or humor. This mechanism may simply copy silhouettes into the original photograph. The position where the silhouette is inserted may be fixed, or provisions can be made to enable the subscriber to designate the desired position using his mobile phone. For example, after a photograph is taken with the camera-enabled mobile phone, or when a preview image is received, a small application in the mobile phone is started. The subscriber marks the desired position of the silhouette in the picture with a small cursor. This information may be transferred to the MMS+ service provider via a separate data message such as a Short Message Service (SMS) message, or the data may be included in the picture itself. The MMS+ service provider retrieves this information and positions the silhouette accordingly. This process may alternatively be used to reposition a stenciled area within the photograph.

The image database may contain pictures for different camera types or lens focal lengths. Therefore, the camera-enabled mobile phone may also send to the MMS+ service provider, other information such as the camera type, lens focal length, resolution, and distance to the person in the photograph. This information enables the MMS+ service provider to utilize stored perspective information to select and paste an image with an appropriate scale into the photograph.

The camera-enabled mobile phone may also download or otherwise contain an editing application that provides the subscriber with greater editing capabilities. The editing may be performed in the phone, or the application may enable the subscriber to indicate desired editing changes to the MMS+ service provider, which then performs the actual editing and returns the edited photograph to the subscriber for review. For example, a building of particular interest may appear in the background of the photograph, but the building is too small. The editing application enables the subscriber to crop the photograph and enlarge the building so that people in the foreground appear to be standing closer to the building. If the MMS+ service provider performs the editing, the subscriber may place a cursor on the building and click a command to zoom. The photograph and editing commands are then sent to the MMS+ service provider, which performs the manipulation and returns the photograph to the subscriber for review. Other types of editing and special effects such as wide angle or fisheye lens effect can also be performed.

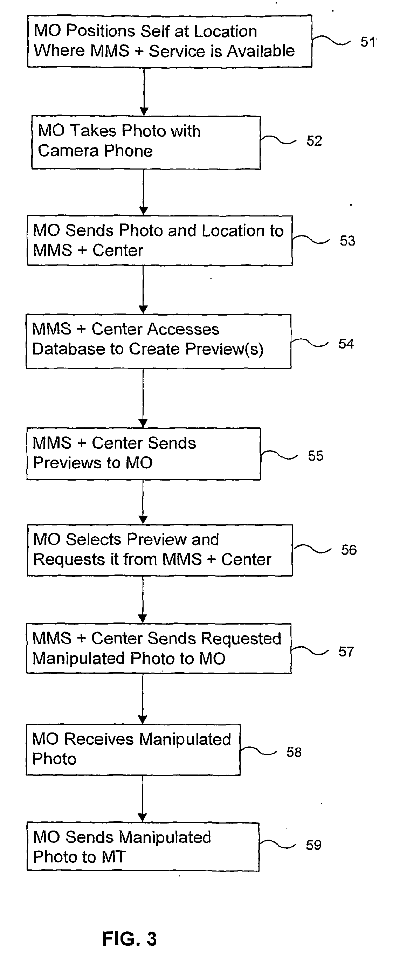

FIG. 3 is a flow chart illustrating the steps of the preferred embodiment of the method of the present invention. At step 51, an originating mobile subscriber (MO) prepares to take a photograph using a camera-enabled mobile phone. Deferred location reporting may be utilized to guide the MO to places for which manipulated photographs are available through the enhanced MMS+ service, and to inform the MO of the direction of sight for which the images are available. Alternatively, marks may be placed on the ground identifying positions and directions of sight for which manipulated photographs are available through the enhanced MMS+ service. At step 52, the MO takes a photograph with the camera-enabled phone. At step 53, instead of sending the photograph through the default MMS center, the photograph is sent to an MMS+Center capable of manipulating photographs. The MO's location information is sent along with the photograph. Additionally, the MMS+ database may contain pictures for different camera types or lens focal lengths. Therefore, other information such as, for example, the camera type, lens focal length, and distance to the person in the photograph may be sent to the MMS+Center. This information enables the MMS+Center to select and paste an image with an appropriate scale into the photograph.

At step 54, instead of immediately sending an M-Notification.ind message to the MT, the MMS+Center accesses the database and may manipulate the photograph with images from the database to create one or more preview versions. Many methods that are used by today's picture or film-editing programs for PCs can be applied by the MMS+Center to automatically manipulate the photograph. At step 55, the MMS+Center sends one or more of the previews back to the MO for review. The previews may be sent one at a time or, optionally, several previews may be sent in one image. Alternatively, descriptive text may be sent, enabling the MO to select previews that he wants to review. At step 56, the MO selects one of the previews and requests it from the MMS+Center. The request may be made by sending an SMS message to the MMS+Center. At step 57, the MMS+Center receives the request and sends the requested manipulated photograph to the MO. At step 58, the MO receives the manipulated photograph and at step 59 sends it via the MMS+Center or a regular MMC to the MT.

There are several alternative points during the process at which the MO may be billed for the service. For example, he may be billed when he sends the photograph to the MMS+Center requesting manipulation. Alternatively, the MO may be billed later, only if he likes and selects one of the previews.

FIG. 4 is a message flow diagram illustrating the flow of messages between network elements when a multimedia message such as a photograph is manipulated by an enhanced MMS+Center and then sent from an MO 61 to an MT 32 in accordance with the teachings of the present invention. The MO originates the process by sending a M-Send.req message 62 to an enhanced MMS+Center 63 via a WAP Gateway/Push Proxy. The MO modifies the M-Send.req message in the present invention to include location information for the MO and, optionally, camera-type information. The MMS+Center sends an M-Send.conf response message 64 back to the MO with an indication that previews are available. The MO sends a WSP GET.req message 65 to the MMS+Center, and the MMS+Center sends the downloaded previews to the MO in an M-Retrieve.conf message 66. The MO then reviews the previews and sends a preview selection to the MMS+Center in an M-Send.req message 67.

The MMS+Center 63 then sends an M-Notification.ind message 68 to the MT 32 via a HTTP/PUSH through the WAP Gateway 38. The M-Notification.ind message informs the MT that a multimedia message is available for retrieval. The MT sends an M-Notify Response.ind 69 to the MMS+Center indicating that the M-Notification.ind message was received. At some time later, when the MT desires to retrieve the multimedia message, the MT sends a WSP GET.req message 70 to the MMS+Center. In response, the MMS+Center sends to the MT an M-Retrieve.conf message 71, which contains the manipulated photograph sent by the MO. The MT then sends an M-Acknowledge.ind message 72 to the MMS+Center when the multimedia message is successfully received. The MMS+Center may optionally send an M-Delivery.ind message 73 back to the MO indicating that the delivery was made.

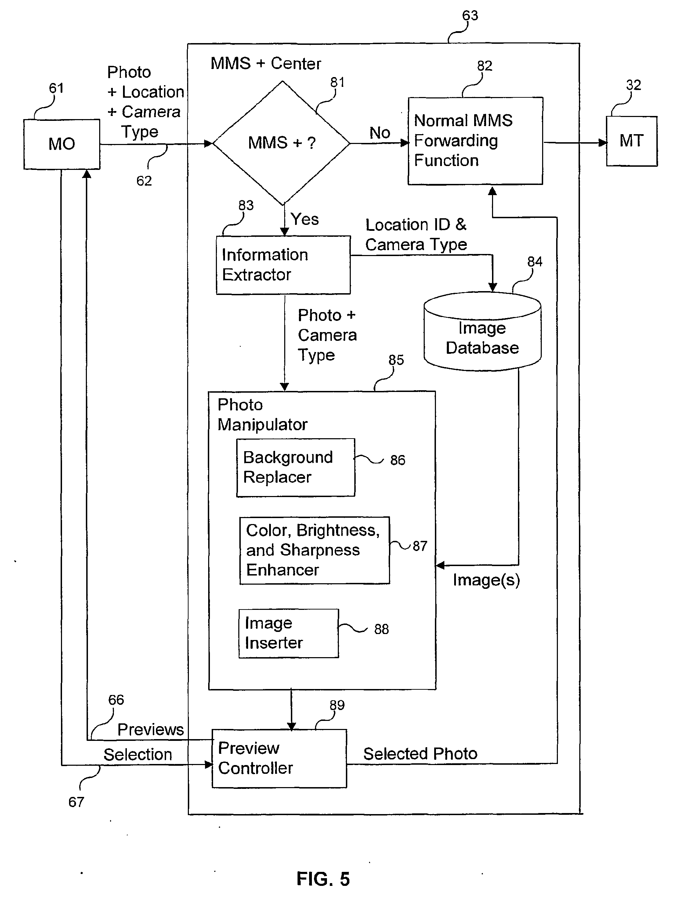

FIG. 5 is a simplified block diagram of an embodiment of the enhanced MMS+Center of the present invention. With reference to FIGS. 4 and 5, the operation of the MMS+Center will now be explained. The MO 61 sends a M-Send.req message 62 to the enhanced MMS+Center 63 with the photograph that the subscriber has taken. The MO modifies the M-Send.req message in the present invention to include location information for the MO and, optionally, camera-type information. The MMS+Center determines in a decision function 81 whether the M-send.req message is requesting normal forwarding or MMS+ services. If the message does not include location information, the decision function may determine that normal forwarding is being requested, and the message and photograph are sent to a normal MMS forwarding function 82. However, if the message includes location information, the decision function may determine that MMS+ services are being requested. In this case, the decision function forwards the message to an information extractor 83. The information extractor extracts the location information and converts it to an ID format suitable for entering an image database 84. If the camera type is also included in the M-Send.req message, the camera information may also be sent to the database.

The photograph, and optionally the camera type, are sent to a photograph manipulator 85. The photograph manipulator may include a background image replacer 86; a color, brightness, and sharpness enhancer 87; and an image inserter 88 as previously described. Images from the image database 84 are supplied to the photograph manipulator, if available. If images are available and/or other manipulation can be performed, the photograph manipulator informs a preview controller 89 that one or more previews are available. The preview controller notifies the MO 61 that previews are available, and if the MO requests them, they are sent in the M-Retrieve.conf message 66 to the MO. The MO then reviews the previews and sends a preview selection to the MMS+Center in the M-Send.req message 67. The preview controller 89 then sends the requested photograph to the normal MMS forwarding function 82 for forwarding to the MT 32, as shown in steps 68-73 of FIG. 4.

The process described above for still photographs can also be utilized to modify video and/or audio sequences. Thus, streaming video taken by a mobile device and sent to an MMS+Center can be modified to manipulate or enhance the quality of the video. For example, if a short film is made of a person standing in front of a sight seeing attraction, the MMS+Center can add images to the video sequence in such a way that a famous celebrity appears to walk through the background of the film. If the video has associated audio, the audio can also be modified.

As will be recognized by those skilled in the art, the innovative concepts described in the present application can be modified and varied over a wide range of applications. Accordingly, the scope of patented subject matter should not be limited to any of the specific exemplary teachings discussed above, but is instead defined by the following claims.

## Claims

1. A method of modifying a photograph ,contained in a multimedia message sent from a camera-enabled mobile phone (61), said method comprising:
receiving in a service center (63), an original photograph in the multimedia message;
extracting (54) an image from an image database (84); and
creating a modified photograph by pasting the image into the original photograph, wherein the multimedia message also includes location information for the camera-enabled mobile phone (61), and the extracting step (54) includes utilizing the location information to extract from the database (84), an image associated with the location of the mobile phone (61).

2. The method of claim 1, wherein the multimedia message also includes information regarding a camera type for the camera-enabled mobile phone (61), and the extracting step (54) includes utilizing the camera-type information to extract from the database. (84), an image associated with the camera type of the camera-enabled mobile phone (61).

3. The method of claim 1, wherein the photograph includes a background area and a foreground area containing an image of at least one person, and the pasting step includes replacing the background area of the photograph with the image extracted from the database (84) while retaining the image of the person in the foreground area.

4. The method of claim 1, wherein the method is a method for automatically modifying the photograph, the method further comprising:
sending the modified photograph to the camera-enabled mobile phone (61);
receiving from the camera-enabled mobile phone (61), an indication that the modified photograph is selected for sending to a recipient (32), and sending the modified photograph to the recipient (32).

5. The method of claim 4, wherein the step of creating a modified photograph also includes enhancing a characteristic of the original photograph, said characteristic being selected from a group consisting of perspective, scale, brightness, color, resolution, and clarity.

6. The method of claim 4, wherein the step of creating a modified photograph also includes adjusting a characteristic of the image to match the original photograph, said characteristic being selected from a group consisting of perspective, scale, brightness, color, resolution, and clarity.

7. A method of modifying a photograph contained in a multimedia message sent from a camera-enabled mobile phone (61), said method comprising:
receiving in a service center (63), an original photograph in the multimedia message; and
creating a modified photograph by enhancing a characteristic of the original photograph, said characteristic being selected from a group consisting of perspective, scale, brightness, color, resolution, and clarity, wherein the step of creating a modified photograph includes the steps of:
receiving a reported location of the camera-enabled mobile phone (61);
using the reported location to extract from an image database (84), an image associated with the location of the mobile phone (61);
determining differences in brightness and color between each pixel of the original photograph and each corresponding pixel of the image extracted from the database (84);
if the difference in brightness and color between a given pixel of the original photograph and a corresponding pixel of the extracted image exceeds a predefined threshold, retaining in the modified photograph, the brightness and
color of the pixel from the original photograph; and
if the difference in brightness and color between the given pixel of the original photograph and the corresponding pixel of the extracted image does not exceed the predefined threshold, utilizing in the modified photograph, the brightness and color of the pixel from the image extracted from the database (84).

8. A method of automatically modifying a photograph contained in a multimedia message sent from a camera-enabled mobile phone (61), said method comprising:
receiving the multimedia message in a service center (63), said message including an original photograph and location information for the camera-enabled mobile phone (61);
using the location information to extract from an image database (84), a plurality of images associated with the location of the mobile phone (61);
creating a plurality of modified photographs by making a plurality of copies of the original photograph and pasting each of the plurality of images into different copies of the original photograph;
sending the plurality of modified photographs to the camera-enabled mobile phone (61);
receiving from the camera-enabled mobile phone (61), a selection of one of the modified photographs for sending to a recipient (32); and
sending the selected modified photograph to the recipient (32).

9. The method of claim 8, wherein the plurality of modified photographs are sent sequentially to the camera-enabled mobile phone (61).

10. The method of claim 8, wherein the plurality of modified photographs are sent to the camera-enabled mobile phone (61) in a single image.

11. A service center (63) for modifying a photograph contained in a multimedia message sent from a camera-enabled mobile phone (61), said center comprising:
means for receiving an original photograph in the multimedia message;
a database (84) of images; and
a photograph manipulator that creates a modified photograph by pasting an image extracted from the database (84) into the original photograph, wherein the multimedia message also includes location information for the camera-enabled mobile phone (61), and the service center is adapted to utilize the location information to extract from the database (84), an image associated with the location of the mobile phone (61).

12. The service center (63) of claim 11, wherein the photograph includes a background area and a foreground area containing an image of at least one person, and the photograph manipulator includes means for replacing the background area of the photograph with the image extracted from the database (8A.) while retaining the image of the person in the foreground area.

13. The service center (63) of claim 11, further comprising means for sending the modified photograph to a recipient (32).

14. The service center (63) of claim 13, further comprising:
means for sending the modified photograph to the camera-enabled mobile phone (61); and
means for receiving from the camera-enabled mobile phone (61), an indication that the modified photograph is selected for sending to the recipient (32).

## Patentansprüche

1. Verfahren zum Modifizieren eines Fotos, das in einer Multimedia-Nachricht enthalten ist, die von einem kamerafähigen Mobiltelefon (61) gesendet wird, wobei das Verfahren umfasst:
Empfangen in einer Dienstzentrale (63) eines Originalfotos in einer Multimedia-Nachricht;
Extrahieren (54) eines Bildes aus einer Bilddatenbank (84); und
Erzeugen eines modifizierten Fotos durch Einfügen des Bildes in das Originalfoto,
wobei die Multimedia-Nachricht außerdem Aufenthaltsortsinformationen für das kamerafähige Mobiltelefon (61) umfasst, und der Extraktionsschritt (54) ein Verwenden der Aufenthaltsortsinformationen zum Extrahieren eines Bildes, das mit dem Aufenthaltsort des Mobiltelefons (61) assoziiert ist, aus der Datenbank (84) umfasst.

2. Verfahren nach Anspruch 1, wobei die Multimedia-Nachricht außerdem Informationen bezüglich eines Kameratyps für das kamerafähige Mobiltelefon (61) umfasst, und der Extraktionsschritt (54) ein Verwenden der Kameratypinformationen zum Extrahieren eines Bildes, das mit dem Kameratyp des kamerafähigen Mobiltelefons (61) assoziiert ist, aus der Datenbank (84) umfasst.

3. Verfahren nach Anspruch 1, wobei das Foto einen Hintergrundbereich und einen Vordergrundbereich, der ein Bild wenigstens einer Person enthält, umfasst, und der Einfügeschritt ein Ersetzen des Hintergrundbereichs des Fotos durch das aus der Datenbank (84) extrahierte Bild bei Bewahren des Bildes der Person im Vordergrundbereich umfasst.

4. Verfahren nach Anspruch 1, wobei es sich bei dem Verfahren um ein Verfahren zum automatischen Modifizieren des Fotos handelt, und das Verfahren ferner umfasst:
Senden des modifizierten Fotos an das kamerafähige Mobiltelefon (61);
Empfangen vom kamerafähigen Mobiltelefon (61) einer Abgabe, dass das modifizierte Foto zum Senden an einen Empfänger (32) ausgewählt ist, und Senden des modifizierten Fotos an den Empfänger (32).

5. Verfahren nach Anspruch 4, wobei der Schritt des Erzeugens eines modifizierten Fotos außerdem ein Verbessern einer Charakteristik des Originalfotos umfasst, wobei die Charakteristik aus einer Gruppe bestehend aus Perspektive, Maßstab, Helligkeit, Farbe, Auflösung und Klarheit ausgewählt wird.

6. Verfahren nach Anspruch 4, wobei der Schritt des Erzeugens eines modifizierten Fotos ein Einstellen einer Charakteristik des Bildes umfasst, um dem Originalfoto zu entsprechen, wobei die Charakteristik aus einer Gruppe bestehend aus Perspektive, Maßstab, Helligkeit, Farbe, Auflösung und Klarheit ausgewählt wird.

7. Verfahren zum Modifizieren eines Fotos, das in einer Multimedia-Nachricht enthalten ist, die von einem kamerafähigen Mobiltelefon (61) gesendet wird, wobei das Verfahren umfasst:
Empfangen in einer Dienstzentrale (63) eines Originalfotos in der Multimedia-Nachricht;
Erzeugen eines modifizierten Fotos durch Verbessern einer Charakteristik des Originalfotos, wobei die Charakteristik aus einer Gruppe bestehend aus Perspektive, Maßstab, Helligkeit, Farbe, Auflösung und Klarheit ausgewählt wird, und der Schritt des Erzeugens eines modifizierten Fotos die folgenden Schritte umfasst:
Empfangen eines gemeldeten Aufenthaltsorts des kamerafähigen Mobiltelefons (61);
Verwenden des gemeldeten Aufenthaltsorts zum Extrahieren eines Bildes, das mit dem Aufenthaltsort des Mobiltelefons (61) assoziiert ist, aus einer Bilddatenbank (84);
Bestimmen von Unterschieden in Helligkeit und Farbe zwischen jedem Pixel des Originalfotos und jedem entsprechenden Pixel des aus der Datenbank (84) extrahierten Fotos;
Bewahren im modifizierten Foto der Helligkeit und Farbe des Pixels vom Originalfoto, wenn der Unterschied in Helligkeit und Farbe zwischen einem bestimmten Pixel des Originalfotos und einem entsprechenden Pixel des extrahierten Bildes eine vordefinierte Schwelle überschreitet; und
Verwenden im modifizierten Foto der Helligkeit und Farbe des Pixels von dem aus der Datenbank (84) extrahierten Bild, wenn der Unterschied in Helligkeit und Farbe zwischen dem bestimmten Pixel des Originalfotos und dem entsprechenden Pixel des extrahierten Bildes eine vordefinierte Schwelle nicht überschreitet.

8. verfahren zum automatischen Modifizieren eines Fotos, das in einer Multimedia-Nachricht enthalten ist, die von einem kamerafähigen Mobiltelefon (61) gesendet wird, wobei das Verfahren umfasst:
Empfangen der Multimedia-Nachricht in der Dienstzentrale (63), wobei die Nachricht ein Originalfoto und Au£enthaltsortsinformationen für das kamerafähige Mobiltelefon (61) umfasst;
Verwenden der Aufenthaltsortsinformationen zum Extrahieren einer Mehrzahl von Bildern, die mit dem Aufenthaltsort des Mobiltelefons (61) assoziiert sind, aus einer Bilddatenbank (84);
Erzeugen einer Mehrzahl von modifizierten Fotos durch Herstellen einer Mehrzahl von Kopien des Originalfotos und Einfügen jedes der Mehrzahl von Bildern in verschiedene Kopien des Originalfotos;
Senden der Mehrzahl von modifizierten Fotos an das kamerafähige Mobiltelefon (61);
Empfangen vom kamerafähigen Mobiltelefon (61) einer Auswahl eines der modifizierten Fotos zum Senden an einen Empfänger (32); und
Senden des ausgewählten modifizierten Fotos an den Empfänger (32).

9. Verfahren nach Anspruch 8, wobei die Mehrzahl von modifizierten Fotos der Reihe nach an das kamerafähige Mobiltelefon (61) gesendet wird.

10. Verfahren nach Anspruch 8, wobei die Mehrzahl von modifizierten Fotos in einem einzigen Bild an das kamerafähige Mobiltelefon (61) gesendet wird.

11. Dienstzentrale (63) zum Modifizieren eines Fotos, das in einer Multimedia-Nachricht enthalten ist, die von einem kamerafähigen Mobiltelefon (61) gesendet wird, wobei die Zentrale umfasst:
Mittel zum Empfangen eines Originalfotos in der Multimedia-Nachricht;
eine Datenbank (84) von Bildern; und
einen Fotomanipulator, der ein modifiziertes Foto durch Einfügen eines aus der Datenbank (84) extrahierten Bildes in das Originalfoto erzeugt, wobei die Multimedia-Nachricht außerdem AufenthaltsortsinformatiDnen für das kamerafähige Mobiltelefon (61) umfasst, und die Dienstzentrale so ausgelegt ist, dass sie die Aufenthaltsortsinformationen zum Extrahieren eines Bildes, das mit dem Aufenthaltsort des Mobiltelefons (61) assoziiert ist, aus der Datenbank (84) verwendet.

12. Dienstzentrale (63) nach Anspruch 11, wobei das Foto einen Hintergrundbereich und einen Vordergrundbereich, der ein Bild wenigstens einer Person enthält, umfasst, und der Fotomanipulator Mittel zum Ersetzen des Hintergrundbereichs des Fotos durch das aus der Datenbank (84) extrahierte Bild bei Bewahren des Bildes der Person im Vordergrundbereich umfasst.

13. Dienstzentrale (63) nach Anspruch 11, ferner umfassend Mittel zum Senden des modifizierten Fotos an einen Empfänger (32).

14. Dienstzentrale (63) nach Anspruch 13, ferner umfassend:
Mittel zum Senden des modifizierten Fotos an das kamerafähige Mobiltelefon (61); und
Mittel zum Empfangen vom kamerafähigen Mobiltelefon (61) einer Angabe, dass das modifizierte Foto zum Senden an den Empfänger (32) ausgewählt ist.

## Revendications

1. Procédé de modification d'une photographie contenue dans un message multimédia envoyé depuis un téléphone mobile équipé d'un appareil photo (61), ledit procédé comprenant les étapes consistant à :
recevoir dans un centre de services (63), une photographie d'origine dans le message multimédia ;
extraire (54) une image d'une base de données d'image (84) ; et
créer une photographie modifiée en collant l'image dans la photographie d'origine, dans lequel le message multimédia inclut aussi une information de position du téléphone mobile équipé d'un appareil photo (61), et l'étape d'extraction (54) inclut d'utiliser l'information de position pour extraire de la base de données (84) une image associée à la position du téléphone mobile (61).

2. Procédé selon la revendication 1, dans lequel le message multimédia inclut aussi une information concernant un type d'appareil photo du téléphone mobile équipé d'un appareil photo (61), et l'étape d'extraction (54) inclut d'utiliser l'information de type d'appareil photo afin d'extraire de la base de données (84) une image associée au type d'appareil photo du téléphone mobile équipé d'un appareil photo (61).

3. Procédé selon la revendication 1, dans lequel la photographie inclut une zone d'arrière-plan et une zone d' avant-plan contenant une image d'au moins une personne, et l'étape de collage inclut de remplacer la zone d'arrière-plan de la photographie par l'image extraite de la base de données (84) tout en conservant l'image de la personne dans la zone d'avant-plan.

4. Procédé selon la revendication 1, dans lequel le procédé est un procédé de modification automatique de la photographie, le procédé comprenant en outre les étapes consistant à :
envoyer la photographie modifiée au téléphone mobile équipé d'un appareil photo (61) ;
recevoir en provenance du téléphone mobile équipé d'un appareil photo (61) une indication que la photographie modifiée est sélectionnée pour l'envoi au destinataire (32), et envoyer la photographie modifiée au destinataire (32).

5. Procédé selon la revendication 4, dans lequel l'étape de création d'une photographie modifiée inclut aussi d'améliorer une caractéristique de la photographie d'origine, ladite caractéristique étant sélectionnée dans un groupe comprenant la perspective, l'échelle de mise au point, la luminosité, la couleur, la résolution et la clarté.

6. Procédé selon la revendication 4, dans lequel l'étape de création d'une photographie modifiée inclut aussi de régler une caractéristique de l'image afin de concorder avec la photographie d'origine, ladite caractéristique étant sélectionnée dans un groupe comprenant la perspective, l'échelle de mise au point, la luminosité, la couleur, la résolution et la clarté.

7. Procédé de modification d'une photographie contenue dans un message multimédia envoyé depuis un téléphone mobile équipé d'un appareil photo (61), ledit procédé comprenant les étapes consistant à :
recevoir dans un centre de services (63), une photographie d'origine dans le message multimédia ; et
créer une photographie modifiée en améliorant une caractéristique de la photographie d'origine, ladite caractéristique étant sélectionnée dans un groupe comprenant la perspective, l'échelle de mise au point, la luminosité, la couleur, la résolution et la clarté, dans lequel l'étape de création d'une photographie modifiée inclut les étapes consistant à :
recevoir une position signalée du téléphone mobile équipé d'un appareil photo (61) ;
utiliser la position signalée pour extraire d'une base de données d'image (84) une image associée à la position du téléphone mobile (61) ;
déterminer des différences de luminosité et couleur entre chaque pixel de la photographie d'origine et chaque pixel correspondant de l'image extraite de la base de données (84) ;
si la différence de luminosité et de couleur entre un pixel donné de la photographie d'origine et un pixel correspondant de l'image extraite excède un seuil prédéfini, retenir dans la photographie modifiée la luminosité et la couleur du pixel de la photographie d'origine ; et
si la différence de luminosité et de couleur entre le pixel donné de la photographie d'origine et le pixel correspondant de l'image extraite n'excède pas le seuil prédéfini, utiliser dans la photographie modifiée la luminosité et la couleur du pixel de l'image extraite de la base de données (84).

8. Procédé de modification automatique d'une photographie contenue dans un message multimédia envoyé depuis un téléphone mobile équipé d'un appareil photo (61), ledit procédé comprenant les étapes consistant à ;
recevoir le message multimédia dans un centre de services (63), ledit message incluant une photographie d'origine et une information de position du téléphone mobile équipé d'un appareil photo (61) ;
utiliser l'information de position pour extraire d'une base de données d'image (84) une pluralité d'images associées à la position du téléphone mobile (61) ;
créer une pluralité de photographies modifiées en faisant une pluralité de copies de la photographie d'origine et copiant chacun de la pluralité d'images dans des copies différentes de la photographie d'origine ;
envoyer la pluralité de photographies modifiées au téléphone mobile équipé d'un appareil photo (61) ;
recevoir en provenance du téléphone mobile équipé d'un appareil photo (61) une sélection d'une des photographies modifiées à envoyer à un destinataire (32) ; et
envoyer la photographie modifiée sélectionnée au destinataire (32).

9. Procédé selon la revendication 8, dans lequel la pluralité de photographies modifiées sont envoyées séquentiellement au téléphone mobile équipé d_{'}un appareil photo (61).

10. Procédé selon la revendication 8, dans lequel la pluralité de photographies modifiées sont envoyées au téléphone mobile équipé d'un appareil photo (61) dans une image unique.

11. Centre de services (63) pour la modification d'une photographie contenue dans un message multimédia envoyé depuis un téléphone mobile équipé d'un appareil photo (61), ledit centre comprenant :
des moyens pour recevoir une photographie d'origine dans le message multimédia ;
une base de données (84) d'images ; et
un manipulateur de photographie qui crée une photographie modifiée en collant une image extraite de la base de données (84) dans la photographie d'origine, dans lequel le message multimédia inclut aussi une information de position du téléphone mobile équipé d'un appareil photo (61), et le centre de services est utilisé afin d'extraite de la base de données (64) une image associée à la position du téléphone mobile (61).

12. Centre de services (63) selon la revendication 11, dans lequel la photographie inclut une zone d'arrière-plan et une zone d'avant-plan contenant une image d'au moins une personne, et le manipulateur de photographie inclut des moyens pour remplacer la zone d'arrière-plan de la photographie par l'image extraite de la base de données (84) tout en conservant l'image de la personne dans la zone d'avant-plan.

13. Centre de services (63) selon la revendication 11, comprenant en outre des moyens pour envoyer la photographie modifiée à un destinataire (32).

14. Centre de services (63) selon la revendication 13, comprenant en outre :
des moyens pour envoyer la photographie modifiée au téléphone mobile équipé d'un appareil photo (61) ; et
des moyens pour recevoir en provenance du téléphone mobile équipé d'un appareil photo (61) une indication que la photographie modifiée est sélectionnée pour l'envoi au destinataire (32).
